# EUROPEAN PATENT APPLICATION

(11) **EP 2 098 135 A1**
(43) Date of publication of application: **09.09.2009**
(21) Application number: 09000898.8
(22) Date of filing: 23.01.2009
(51) Int. Cl.: A46D 3/00, A46D 3/04, B29C 45/00, A46D 3/08

(54) **Method with adapted cooling time for manufacturing brushes**

(30) Priority: 03.03.2008 BE 200800133
(71) Applicant: G.B. BOUCHERIE, N.V., 8870 Izegem (BE)
(72) Inventor: Boucherie, Bart, Gerard, 8870 Izegem (BE)
(74) Representative: Donné, Eddy

(57) **Abstract**

Method with an adapted cooling time for manufacturing brushes, **characterised in that** a device (11) is used which is formed of a single conveyor belt (20) via which brush body parts (10) are supplied and transported to a transfer position (21) by means of the above-mentioned belt (20), from where they are conveyed to a second belt (23) via transfer means (22) and are transported to a discharge position (24).

Device to be used with the method according to the invention.

## Description

The present invention concerns a method with adapted cooling time for manufacturing brushes and a device that can be used with the above-mentioned method.

In particular, the method concerns the manufacturing of brushes whereby a holder is being provided with bundles of fibres to be connected afterwards with the remaining part of the brush body by means of an injection moulding process.

The brush bodies are carried off thereafter, possibly to a finishing device where operations such as printing, marking, affixing stickers and further finishing of the fibres can take place, for example rounding off or shaving.

A first problem arising with this method is that, in order to fasten the bundles of fibres, they are melted or melted together. However, if the bundles of fibres are composed of relatively much material - for example a bundle with thick fibres - they will stay weak for a while after having been melted together, and a cooling phase will have to be provided for in the production process. The length of the cooling phase depends on the used material and/or the dimensions of the fibres.

A disadvantage of the present production techniques is that they do not provide for a cooling phase with a variable length before carrying the holders to the injection moulding process.

A second problem occurring with the above-described method is that, after the injection moulding process, the holders must be cooled as well and a second cooling phase is required. Depending on the material that is used to be injected round the holders and the dimensions of the part that is being injected around, the required length of the second cooling phase will vary.

A disadvantage of the present production techniques is that they do not provide for a cooling phase with a variable length after the injection moulding process.

An additional problem is that the melting temperature of the material which is injected round the holder with the bundles of fibres must be taken into account. For, if the melting temperature of the material which is injected round the holders is higher than or equal to that of the material of the molten fibres (over which the injection material usually flows), there is a risk for the molten fibres to become weak again, as a result of which they might partly come off. This has for a result that the manufactured brushes are of poor quality, as the fibres may come off or become deformed.

The present invention aims to remedy these and possibly also other disadvantages.

To this end, the present invention concerns a method with an adapted cooling time for manufacturing brushes whereby a device is used formed of a single conveyor belt over which parts of brush bodies are supplied and transported to a transfer position by means of the above-mentioned belt, from where they are conveyed to a second belt via transfer means to be finally transported to a discharge position.

An advantage of the method according to the invention is that the intervals at which the transfer means are activated can be set depending on the required cooling time and that the mutual transport speed ratios of the conveyor belts can be mutually adjusted, resulting in a larger flexibility of the brush manufacturing process, whereby the materials out of which the brush body parts are made can be taken into account.

An additional advantage is that fibres coming off or being deformed after the injection moulding process can be avoided, such that brushes of a better quality can be made.

The invention also concerns a device that can be used with a method according to the invention.

In order to better explain the characteristics of the invention, the following preferred embodiments are described by way of example only without being limitative in any way, with reference to the accompanying drawings, in which:

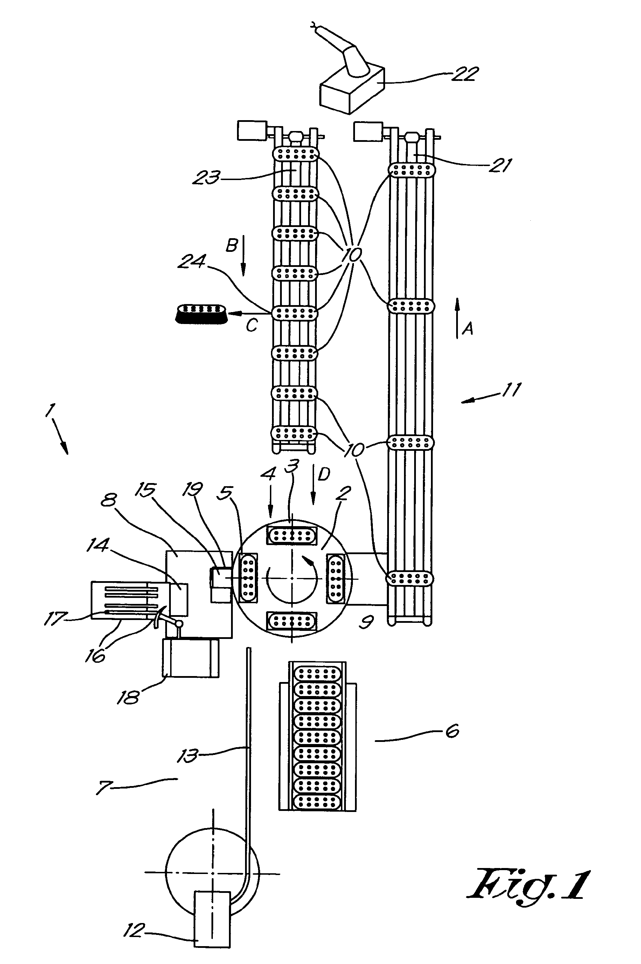

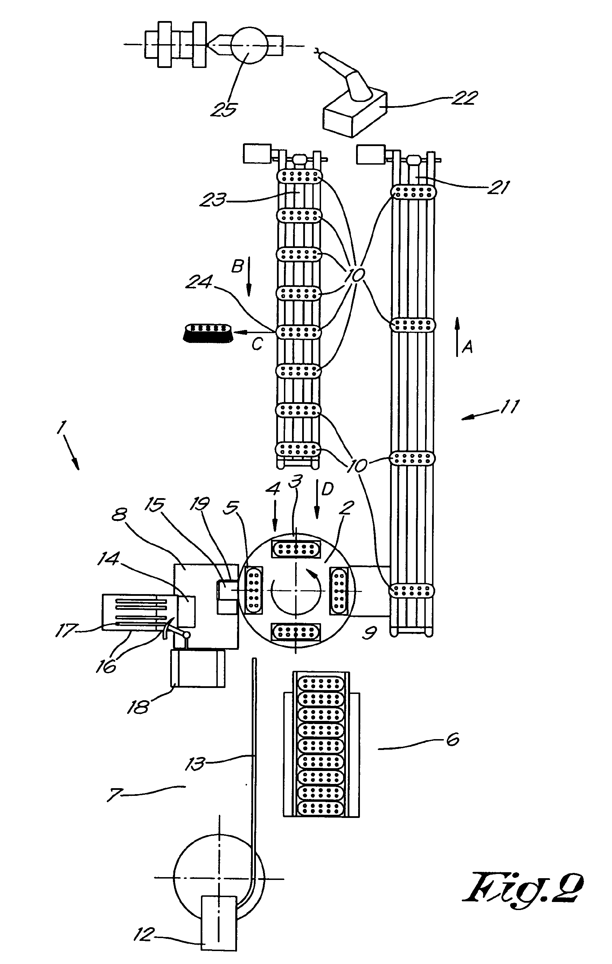

figures 1 and 2 schematically illustrate the method according to the invention.

Figure 1 shows the method according to the invention for manufacturing brushes with an adapted cooling time according to the invention and it first shows a top view of a fibre fixing device 1 known as such. This device 1 comprises a closed circuit 2 of clamping devices 3 provided on rotating tables 4. These clamping devices 3 are provided with clamps, not shown in the figure, to clamp holders 5 for bundles of fibres.

The clamping devices 3 hereby go through for example three stations, i.e. a station 6 and/or 7 where the holders 5 are being introduced, a station 8 where the holders 5 are being filled with bundles of fibres and a station 9 where the brush body parts filled with bundles of fibres are carried to the actual device 11 for an adapted cooling.

The station 6, 7 for the introduction of the holders 5 may be designed such that it is fit for a manual or an automatic introduction or both. In the given example, the station 6, 7 comprises a part 6 for manual introduction and a part 7 for automatic introduction. In case of an automatic introduction, the holders 5 are supplied from a stacking cartridge 12 or the like via an automatic supply device 13 such as a vibratory hopper.

Such systems are sufficiently known as such and hence they will not be further discussed in detail.

The station 8 for introducing the bundles of fibres in the holders 5 preferably consists, as is represented, of a machine part with different supports 14 and 15 that change places, in this case two supports 14 and 15. Every support 14, 15 may contain several groups of openings for the filling cartridges of the brushes.

These supports 14, 15 change places between a filling station 16 where the bundles of fibres are being laterally separated from one or several fibre cartridges 17 by means of at least one pair of pick-up devices or separating devices for the bundles of fibres 18 and where they are placed in the openings of the supports 14, 15 on the one hand, and a discharge station 19 where the bundles of fibres are being carried from the support 14, 15 concerned in the holders 5 situated underneath them on the other hand, after which the fibres will be fixed by for example melting them.

The station 9 where the brush body parts 10 provided with bundles of fibres are situated is connected to a first conveyor belt 20 which is part of the device 11. This conveyor belt 20 is a generally known means of transport and it may also be designed as a belt or a chain or the like.

The above-mentioned parts are transported to a transfer position 21 according to arrow 20 A via said first belt. In the transfer position 21, the device 11 is provided with transfer means 22 conveying the above-mentioned parts 10 to a second conveyor belt 23, from where the parts 10 will be carried to a discharge position 24 according to arrow B.

A part 10 is discharged according to arrow C and a holder 5 may possibly be recycled and carried back to the circuit 2 according to arrow D. Arrow C may possibly lead to a final processing, for example connecting a brush body to a handle or any other processing operations whatsoever.

Figure 1 represents the transfer means 22 as a robot for carrying the above-mentioned parts 10 from the first conveyor belt 20 to the second conveyor belt 23. It is clear that the transfer means can also be designed as a simple pneumatic or hydraulic push tool such as a trailer, a carriage or the like.

The method according to the invention for manufacturing brushes with an adapted cooling time, as represented in figure 1, is simple and as follows.

First, bundles of fibres 4 are fixed in parts 10 in the known manner. At the station 9, the parts 10 are carried to the first conveyor belt 20 of the actual device 11 for the adapted cooling time and from there they are conveyed to a transfer position 21.

The invention aims to accord the parts 20 a certain cooling time before they reach the transfer position 21 by adjusting the speed of the conveyor belt 20. Next, the transfer means 22 are activated at adjustable points in time to carry one or several parts 10 from the first conveyor belt 20 to the second conveyor belt 23.

The regularity with which the transfer means 22 are activated, the speed of the first conveyor belt 20 and/or the speed of the second conveyor belt 23 can be set by the craftsman depending on the qualities of the material out of which the parts 10 are made.

An advantage of the method according to the invention is that more flexibility is obtained in the manufacturing process of brushes, whereby the materials out of which the brush body parts 10 are made can be taken into account.

This is particularly advantageous if the parts 10 have to undergo some further processing. Figure 2 shows how the parts 10 are carried from the transfer position 21 into an injection moulding device 25 by means of the above-mentioned transfer means 22 to be joined there with an additional brush body part, whereby said injection moulding device 25 is situated between the first conveyor belt 20 and the second conveyor belt 23.

### EXAMPLE 1.

In a first practical application of a method according to the invention, the bundles of fibres are made of polypropylene and the bundles of fibres are fixed and melted at a temperature of 200°C.

The holders of the parts 10 are injected all around with an additional brush body part in an injection moulding device, which part is formed of polypropylene as well, which entails a risk for the fixed bundles of fibres to become weak again.

This is prevented by setting the speed of the second conveyor belt 23 such that there is a sufficiently long waiting time before the completed brush is taken out of the mould or the mould part.

### EXAMPLE 2.

In a second practical application of a method according to the invention, the bundles of fibres are made of polyethylene terephthalate, and the bundles of fibres are fixed and melted at a temperature of 350°C.

The holders of the parts 10 are injected all around with an additional brush body part in an injection moulding device, which part is formed of polypropylene, such that there is no risk for the fixed bundles of fibres to become weak again.

This is prevented by setting the speed of the second conveyor belt 23 such that one does not have to wait before taking the completed brush out of the mould or the mould part.

In the figures, the first and second conveyor belt 20 and 23 of the device 11 run parallel, and the brush body parts are being transported in opposite directions A and B. It is clear, however, that this is not necessary. This arrangement may be desirable to save room, but it is clear that the second conveyor belt 23 can be situated in the prolongation of or may form an angle with the above-mentioned first conveyor belt 20.

The device 10 does not exclude that additional finishing operations such as control, printing and the like are carried out after the parts 10 have been supplied to the discharge position 24.

In the figures and the preceding description, the bundles of fibres were fixed in a brush body part 10 according to a method in accordance with EP 0,972,465, but it is clear that this method is not necessary to apply a method with an adapted cooling time according to the present invention.

The device 1 with parts 2-9 and 12-19 as represented in the figures is only used to illustrate the origin of the parts 10, but it is clear that the parts 10 can be supplied via the first conveyor belt 20 of the device 11 whereby the bundles of fibres are fixed according to another method than the one disclosed in EP 0,972,465.

The present invention is by no means restricted to the embodiments described by way of example and represented in the accompanying drawings; on the contrary, such an improved method for manufacturing brushes according to the invention can be made in all sorts of ways while still remaining within the scope of the invention.

## Claims

1. Method with an adapted cooling time for manufacturing brushes, **characterised in that** a device (11) is used which is formed of a single conveyor belt (20) via which brush body parts (10) are supplied and transported to a transfer position (21) by means of the above-mentioned belt (20), from where they are conveyed to a second belt (23) via transfer means (22) and are transported to a discharge position (24).

2. Method with an adapted cooling time for manufacturing brushes according to claim 1, **characterised in that** the above-mentioned transfer means (22) make the above-mentioned parts (11) go via an injection moulding device (25) provided on the second conveyor belt (23).

3. Method with an adapted cooling time for manufacturing brushes according to any one of the preceding claims, **characterised in that** the regularity with which the transfer means (22) are activated, the speed of the first conveyor belt (20) and/or the speed of the second conveyor belt (23) may vary and can be set.

4. Method with an adapted cooling time for manufacturing brushes according to any one of the preceding claims, **characterised in that** the transport speed ratios of the first conveyor belt (20) and the second conveyor belt (23) are adjusted depending on the materials out of which the parts (10) are made and the required cooling time.

5. Device for manufacturing brushes to be applied in a method according to any one of the preceding claims, **characterised in that** the device (11) is formed of a first conveyor belt (20) which conveys the supplied brush body parts (10) to a transfer position (21) and of transfer means (22) to carry the above-mentioned brush parts from the transfer position (21) to a second conveyor belt (23) from where the parts (10) are transported to a discharge position (24).

6. Device according to claim 5, **characterised in that** the above-mentioned first belt (20) and second belt (23) run parallel and transport the above-mentioned brush body parts (10) in the opposite sense.

7. Device according to claim 5 or 6, **characterised in that** an injection moulding device (25) is provided on or at the second conveyor belt (23) through which the body parts (10) are carried.
